# EUROPÄISCHE PATENTANMELDUNG

(11) **EP 4 063 833 A1**
(43) Veröffentlichungstag der Anmeldung: **28.09.2022**
(21) Anmeldenummer: 21209726.5
(22) Anmeldetag: 22.11.2021
(51) Int. Cl.: G01N 21/3563, G01N 21/90, G01N 21/3554

(54) **VERFAHREN UND VORRICHTUNG ZUM ANALYSIEREN VON KUNSTSTOFFVORFORMLINGEN**

(30) Priorität: 25.03.2021 DE 102021107545
(71) Anmelder: Krones AG, 93073 Neutraubling (DE)
(72) Erfinder: Olenberg, Philipp, 93073 Neutraubling (DE); Fischer, Simon, 93073 Neutraubling (DE); Aust, Robert, 93073 Neutraubling (DE); Forsthoevel, Jochen, 93073 Neutraubling (DE)
(74) Vertreter: Bittner, Bernhard

(57) **Zusammenfassung**

Verfahren zum Analysieren von Kunststoffvorformlingen, wobei Kunststoffvorformlinge (10) mittels einer Transporteinrichtung (2) entlang eines vorgegebenen Transportpfads transportiert werden und in wenigstens einem Bereich des Kunststoffvorformlings ein Infrarot-Absorptionsgrad ermittelt wird, wobei zur Ermittlung des Infrarot-Absorptionsgrades des Kunststoffvorformlings mittels einer ersten Strahlungseinrichtung (4) mit Infrarotstrahlung beaufschlagt werden und durch die Kunststoffvorformlinge hindurch tretende Strahlung mittels wenigstens einer Empfangseinrichtung (62) aufgenommen wird und aus dieser aufgenommenen Strahlung ein Infrarot-Absorptionsverhalten des Kunststoffvorformlings ermittelt wird, dadurch gekennzeichnet, dass die Strahlungseinrichtung (4) die Kunststoffvorformlinge mit infraroter Strahlung in einem vorgegebenen Wellenlängenbereich beaufschlagt und eine Auswerteeinrichtung (8) die Strahlung in Abhängigkeit von ihrer Wellenlänge in einem Wellenlängenbereich von 1500 nm bis 2000 nm auswertet.

## Beschreibung

Die vorliegende Erfindung bezieht sich auf ein Verfahren und eine Vorrichtung zum Analysieren von Kunststoffvorformlingen. Im Stand der Technik ist es bekannt, dass Kunststoffvorformlinge erwärmt werden und anschließend durch Umformungseinrichtungen wie beispielsweise Streckblasmaschinen zu Flaschen ungeformt werden. In jüngerer Zeit werden zum Teil auch Kunststoffvorformlinge anteilig oder vollständig aus recyceltem Material zu diesem Zweck verwendet. Dabei zeigt sich jedoch, dass das Material derartiger Kunststoffvorformlinge hinsichtlich seiner Kunststoffmaterialeigenschaften weniger homogen ist als bei der Verwendung von nicht recyceltem Material. Daher kommt es im Stand der Technik des Öfteren aufgrund dieser Inhomogenitäten zu der Produktion von Ausschuss.

Entsprechend sind aus dem Stand der Technik Vorrichtungen und Verfahren bekannt, bei denen die Kunststoffvorformlinge analysiert werden, insbesondere um auf die Herstellung der Kunststoffvorformlinge und/oder auf Parameter beim Erwärmen oder Umformen der Kunststoffvorformlinge gezielt einwirken zu können.

Aus der EP 2 110 224 A1 sind ein Verfahren und eine Vorrichtung zum Herstellen von Kunststoffbehältnissen mit Infrarot-Absorptionsüberwachung bekannt. Dabei ist es bekannt, dass an wenigstens einem Bereich der Kunststoffe der Infrarot-Absorptionsgrad ermittelt wird und nachfolgend ein für diesen Infrarot-Absorptionsgrad charakteristischer Wert bei der Herstellung der Kunststoffvorformlinge genutzt wird. Dabei wird beschrieben, dass es möglich ist, von Kunststoffvorformlingen im nahen Infrarotbereich Qualitätsparameter zu erfassen. Daneben ist es aus der Druckschrift auch bekannt, dass diese Parameter zur Regelung von Anlagen benutzt werden können.

Daneben ist es aus dem internen Stand der Technik der Anmelderin auch bekannt, dass die erfassbaren Qualitätsparameter die breitbandige Infrarotabsorption der Kunststoffvorformlinge beinhalten, die das Erwärmen der Kunststoffvorformlinge und die dazu verwendeten Maschineneinstellungen beeinflusst. An sich unerwünschte Chargenschwankungen, die insbesondere auch bei der Verwendung von recyceltem Material in den Kunststoffvorformlingen auftreten können, können wechselnde Infrarotabsorptionen bedingen.

Daneben hat die Anmelderin herausgefunden, dass ein erfassbarer Qualitätsparameter auch der Wassergehalt der Kunststoffvorformlinge ist, der einerseits ein allgemeiner Qualitätsparameter ist, der mit der Lagerungsdauer und Behandlung der Kunststoffvorformlingen zusammenhängt, weiterhin jedoch auch die späteren Eigenschaften der aus den Kunststoffvorformlingen hergestellten Behältnisse beeinflussen kann. Er kann auch das Verhalten der Kunststoffvorformlinge im Heizprozess und insbesondere mit Infrarot- oder Mikrowellenstrahlung beeinflussen.

Im Falle der oben erwähnten EP 2 110 224 B1 wurde insbesondere die Regelung der Zugabe von Infrarotabsorptionsmaterial bei der Herstellung von Kunststoffvorformlingen auf Basis eines an diesen ermittelnden Infrarotabsorptionsgrads offenbart. Dabei werden für die Bestimmung der Infrarotqualitätsparameter Wellenbereiche von beispielsweise 800 nm bis 1200 nm, von 1200 nm bis 1500 nm oder auch von 3000 nm bis 7000 nm beansprucht.

Allerdings hat die Anmelderin ermittelt, dass in den Bereichen von beispielsweise 800 bis 1500 nm die Reflektion dominant ist und damit die Messung der Absorption ungünstig ist. Daneben ist auch die Sensitivität geeigneter Detektoren ungünstig und weiterhin auch die Erfassung der Wasserabsorptionsbande weniger sinnvoll (in diesem Bereich liegt nur ein eher schwaches Absorptionsband um ca. 1420 nm).

In den beschriebenen längerwelligen Bereichen, die beispielsweise 3000 bis 7000 Nanometer umfassen, ist einerseits die Absorption des Materials sehr stark und erschwert die Messung (der Transmission) durch die relativ dickwandigen Kunststoffvorformlinge. Weiterhin ist eine starke Wasserabsorptionsbande im Wellenbereich zwischen 1500 nm und 3000 nm für die Messung vergleichsweise einfach zugänglich.

Dem Fachmann stellt sich daher die Aufgabe, derartige Absorptionsmessungen besser auf die Herstellung von Kunststoffbehältnissen anzupassen. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Analysieren von Kunststoffvorformlingen (und/oder zum Bestimmen von physikalischen und insbesondere optischen Eigenschaften von Kunststoffvorformlingen) werden Kunststoffvorformlinge mittels einer Transporteinrichtung entlang eines Transportpfads transportiert und in wenigstens einem Bereich des Kunststoffvorformlings wird ein Infrarotabsorptionsgrad der Kunststoffvorformlinge ermittelt, wobei zur Ermittlung des Infrarotabsorptionsgrades der Kunststoffvorformling mittels einer ersten Strahlungseinrichtung mit Infrarotstrahlung beaufschlagt werden und durch den Kunststoffvorformlinge hindurchtretende Strahlung mittels wenigstens einer Empfangseinrichtung aufgenommen wird. Aus dieser aufgenommenen Strahlung wird ein Infrarotabsorptionsverhalten des Kunststoffvorformlings (insbesondere in Abhängigkeit von einer Wellenlänge der Strahlung) ermittelt.

Erfindungsgemäß beaufschlagt die Strahlungseinrichtung die Kunststoffvorformlinge mit Infraroter Strahlung in einem vorgegebenen Wellenlängenbereich und eine Auswerteeinrichtung wertet die Strahlung in Abhängigkeit von ihrer Wellenlänge in einem Wellenlängenbereich von 1500 Nanometer bis 2000 Nanometer aus.

Insbesondere bestimmt die Auswerteeinrichtung eine Intensität der durch die Kunststoffvorformlinge tretenden Strahlung in Abhängigkeit von einer Wellenlänge der Strahlung.

Bei einer bevorzugten Ausführungsform werden die Kunststoffvorformlinge während der Bestimmung des Absorptionsverhaltens entlang eines geradlinigen Transportpfads transportiert. Bei einem weiteren bevorzugten Verfahren werden die Kunststoffvorformlinge während der Bestimmung des Absorptionsverhaltens beabstandet zueinander transportiert. Vorteilhaft werden die Kunststoffvorformlinge zwischen der Strahlungs- und der Empfängereinrichtung gefördert.

Die Strahlungseinrichtung bzw. der Sender soll elektromagnetische Strahlung im nahen Infrarot liefern, und kann beispielsweise eine beheizte Wendel oder einen Halogenstrahler aufweisen. Bevorzugt ist eine von der Strahlungseinrichtung abgegebene Strahlungsintensität steuerbar oder regelbar.

Daneben wäre es auch denkbar, dass als Strahlungsquelle ein Laser eingesetzt wird, insbesondere ein Laser mit einer vergleichsweise breitbandigen Abstrahlcharakteristik. So könnte beispielsweise ein durchstimmbarer Laser eingesetzt werden, etwa ein Laser, der einen sog. OPO (optisch parametrischer Oszillator) aufweist.

Optional oder alternativ ist es möglich, dass die Intensität der Strahlungseinrichtung auf Basis eines Referenzwerts ohne Probe oder einer separat gemessenen physikalischen Größe der Strahlungseinrichtung (z. B. seiner Temperatur) geregelt wird.

Bevorzugt weist die Strahlungseinrichtung eine Reflektoreinrichtung auf, welche die Strahlung auf die Kunststoffvorformlinge und/oder zu der Empfangseinrichtung lenkt bzw. zusätzlich auf diese richtet. Optional oder alternativ können optische Komponenten wie Linsen, Blenden oder Spiegel im Strahlengang zwischen der Strahlungseinrichtung und der Empfangseinrichtung angebracht werden, um das Signal zu führen und/oder zu verbessern. Bei einer weiteren bevorzugten Ausführungsform sind Abschirmeinrichtungen vorgesehen, um den Strahlengang zwischen der Strahlungseinrichtung und der Empfangseinrichtung vor Reflektionen und direkter Einstrahlung aus anderen Strahlungsquellen als der Strahlungseinrichtung abzuschirmen.

Bevorzugt ist eine entsprechende Vorrichtung so ausgebildet, dass die Kunststoffvorformlinge den Strahlengang senkrecht dazu und bevorzugt stets mit dem gleichen Abschnitt des Preformkörpers durchlaufen. Die Vorrichtung kann vorzugsweise in der Preformzuführung einer Streckblasanlage, jedoch auch an Kunststoffvorformling-Transfereinrichtungen mit fester Teilung (z. B. in einer Heizeinrichtung) oder einer anderen Handhabungsvorrichtung der Preformen angebracht werden. Im Rahmen der vorliegenden Anmeldung werden die Begriffe Kunststoffvorformling und Preform synonym verwendet.

Dabei ist möglich, dass die von der Strahlungseinrichtung ausgegebene Strahlung breitbandiger ist, jedoch empfängerseitig nur bestimmte Bereiche ausgewertet werden. Es wäre jedoch auch möglich, dass die ausgegebene Strahlung bereits bevor Sie auf die Kunststoffvorformlinge trifft (insbesondere wellenlängenabhängig) gefiltert wird, derart das nur bestimmte Strahlungsanteile auf die Kunststoffvorformlinge gelangen.

So ist es möglich, dass eine Infrarottransmissions oder -absorptionsmessung in einem Bereich von 1500 bis 2000 nm durchgeführt wird und innerhalb dieses Bereichs an einer oder mehreren Zielwellenlängen eine Auswertung vorgenommen wird, sodass sich insbesondere nach einer Signalverarbeitung ein oder mehrere Messwerte ergeben. Dabei kann es sinnvoll sein, einen eine bestimmte Zielwellenlänge umgebenden spektralen Bereich in die Auswertung einzubeziehen.

Bevorzugt erfolgen die Absorptionsmessungen als Transmissionsmessungen bzw. Absorptionsmessungen durch einen Bereich des Kunststoffvorformlings insbesondere einen Kunststoffvorformlings-Körper hindurch. Dabei ist es möglich, dass eine und oder mehre angeordnete Strahlungseinrichtungen bzw. Sender vorgesehen sind und/oder auch ein oder mehrere - insbesondere parallel angeordnete - (Strahlungs-)Empfangseinrichtungen.

Daneben ist es auch möglich, dass ein oder mehrere parallel angeordnete Strahlungseinrichtungen und ein oder mehrere optische Einrichtungen vorhanden sind, welche das Signal zu zwei oder mehreren Empfangseinrichtungen aufteilen, wie beispielsweise Spiegel, wie unten genauer beschrieben. Es wird darauf hingewiesen, dass im Rahmen der vorliegenden Anmeldungen die Begriffe Empfänger und Empfangseinrichtung synonym verwendet werden.

Bevorzugt erfasst die Empfangseinrichtung oder erfassen mehrere Empfangseinrichtungen wenigstens einen der bestimmten Zielwellenlänge.

Bei einer bevorzugten Ausführungsform weisen die Kunststoffvorformlinge einen Mündungsbereich, einen sich in einer Längsrichtung der Kunststoffvorformlinge an diesem Mündungsbereich anschließenden Grundkörper und einen sich in der Längsrichtung an den Grundkörper anschließenden Bodenkuppenbereich auf. Die Kunststoffvorformlinge werden bevorzugt in einem Bereich des Grundkörpers mit der Infrarotstrahlung beaufschlagt. Der Grundkörper ist besonders geeignet für die Absorptionsmessungen, da er einerseits in der Regel geradlinig bzw. Zylinderförmig verläuft und keine zusätzlichen, störenden Reflektionen beispielsweise an Gewindeabschnitten oder an einem Tragring auftreten.

Bei einer weiteren bevorzugten Ausführungsform wird die Absorption in einem ersten Wellenlängenbereich bestimmt, wobei dieser erste Wellenlängenbereich zwischen 1500 nm und 1600 nm liegt.

Eine Infrarottransmessung bzw. Absorptionsmessung ist günstig in einem Bereich von 1500 bis 2000 nm und wird, wie oben erwähnt innerhalb dieses Bereichs in einer oder mehreren Zielwellenlänge vorgenommen.

Eine dieser Zielwellenlängen kann beispielsweise bei etwa 1550 nm liegen, das heißt einem Bereich mit relativ hoher Transmission. In diesem Wellenlängenbereich können unterschiedliche Absorptionsverhalten der PET Kunststoffvorformlinge gut unterschieden werden. Daraus kann bevorzugt ein Kennwert, der die Erwärmung der Preformen mittels Infrarotstrahlung charakterisiert, gebildet werden. Bevorzugt liegt dieser Wellenlängenbereich zwischen 1500 nm und 1600 nm, bevorzugt zwischen 1510 nm und 1590 nm, bevorzugt zwischen 1520 nm und 1580 nm, bevorzugt zwischen 1530 nm und 1570 nm.

Gleichzeitig kann ein Messwert an dieser Stelle auch zusammen mit anderen Messwerten zur Bildung weiterer Mess- oder Kennwerte, vorzugsweise zur quantitativen Ermittlung des Wassergehaltes, verrechnet werden. Dies wird weiter unten in den Figuren erläutert. Hier können unterschiedliche Absorptionsverhalten der PET Kunststoffvorformlinge gut unterschieden werden.

Besonders bevorzugt sind die Kunststoffvorformlinge aus PET hergestellt.

Bei einem weiteren bevorzugten Verfahren wird die Absorption in einem Wellenlängenbereich bestimmt, wobei dieser Wellenlängenbereich zwischen 1850 nm und 1960 nm liegt. Bevorzugt liegt dieser Wellenlängenbereich zwischen 1860 nm und 1950 nm, bevorzugt zwischen 1870 nm und 1940 nm, bevorzugt zwischen 1880 nm und 1930 nm. Besonders bevorzugt liegt dieser Bereich um eine Ziel Wellenlänge von 1915 Nanometern.

Damit handelt es sich bei der zweiten Zielwellenlänge um eine Wellenlänge von 1915 nm. Dabei handelt es sich um einen Bereich der stärksten Wasserabsorptionsbande im nahen Infrarot. Daraus kann letztlich ein Messwert abgeleitet werden, der als Messwert für die Wasserabsorption innerhalb des Kunststoffvorformlings genutzt wird oder - insbesondere mit einem anderen Messwert - zu einem quantitativen Wassergehalt verrechnet werden kann.

Bei einem bevorzugten Verfahren wird wenigstens ein Wert ausgegeben, der für einen Wassergehalt der Kunststoffvorformlinge charakteristisch ist. Dabei kann es sich insbesondere um einen Absorptionswert der Kunststoffvorformlinge bei einer vorgegebenen Wellenlänge oder in einem vorgegebenen Wellenlängenbereich handeln, insbesondere in den oben angegebenen Wellenlängenbereichen um 1550 nm und 1915 nm.

Bevorzugt werden die Messungen wenigstens in diesen beiden Wellenlängenbereichen durchgeführt.

Bei einem bevorzugten Verfahren gibt die Strahlungseinrichtung Strahlung aus, welche die Kunststoffvorformlinge nicht erwärmt und/oder die in ihrer Intensität geringer ist als 20 % derjenigen Strahlung, die zum Erwärmen der Kunststoffvorformlinge verwendet wird.

Bei einem weiteren bevorzugten Verfahren wird die durch die Kunststoffvorformlinge hindurchtretende Strahlung mittels wenigstens zwei Empfangseinrichtungen aufgenommen. Damit ist insbesondere eine Beurteilung des Kunststoffvorformlings in den genannten Wellenlängenbereichen möglich.

Bei einem weiteren bevorzugten Verfahren sind die beiden Empfangseinrichtungen zur Aufnahme und/oder zur Auswertung von Strahlungen unterschiedlichen Wellenlängenbereichen geeignet und bestimmt. So kann, wie oben erwähnt jede Empfangseinrichtung eine der Zielwellenlängenberiechen erfassen. Dies kann beispielsweise durch den Einsatz von optischen Bandpassfiltern erfolgen und in diesem Fall in technisch sinnvoller Weise einschließlich eines erfassten Wellenlängenbereichs von vorzugsweise bis zu 100 nm, gegebenenfalls bis 200 nm, zentriert auf die oben genannten Zielwellenlängen und insbesondere auch bezogen auf ein Transmissionsniveau von 50 %.

Bevorzugt wird die Messung als Transmissionsmessung bzw. Absorptionsmessung durch den Vorformlingskörper durchgeführt, was mittels entweder einem oder mehreren (insbesondere parallel angeordneten Strahlungseinrichtungen und/oder einem oder mehr (insbesondere parallel angeordneten) Empfangseinrichtungen oder einem oder mehreren parallel angeordneten Strahlungseinrichtungen und einer oder mehreren optischen Einrichtungen, welche das Signal bzw. die Strahlung auf zwei oder mehr Empfangseinrichtungen aufteilt, erfolgen kann.

Bei einem weiteren bevorzugten Verfahren wird die Strahlung von wenigstens zwei Strahlungseinrichtungen abgegeben. Diese beiden Strahlungseinrichtungen können dabei in der Längsrichtung der Kunststoffvorformlinge übereinander (oder senkrecht zu der Längsrichtung nebeneinander) angeordnet sein.

Bei einer weiteren bevorzugten Ausführungsform werden die Strahlungseinrichtung(en) auch unter Berücksichtigung der Transportbewegung der Kunststoffvorformlinge gesteuert. So ist es möglich, dass Strahlung nur abgegeben wird, wenn gerade ein Kunststoffvorformling die Strahlungseinrichtung passiert. Es wäre jedoch auch möglich, dass die Strahlungseinrichtung permanent Strahlung abgibt. Auch die Empfangseinrichtungen können unter Berücksichtigung der Transportbewegung der Kunststoffvorformlinge gesteuert werden und beispielsweise nur aktiv sein, wenn ein Kunststoffvorformling gerade den Strahlengang zwischen der Strahlungseinrichtung und der Empfangseinrichtung passiert.

Weiterhin ist es auch möglich, dass zum Zwecke der Messung eine Position der Kunststoffvorformlinge entlang deren Transportpfad bestimmt wird, beispielsweise mittels Lichtschranken. So kann beispielsweise die Absorptionsmessung durch eine Lichtschranke ausgelöst bzw. getriggert werden.

Bei einem weiteren bevorzugten Verfahren wird, wie oben erwähnt die von der Strahlungseinrichtung ausgegebene und auf die Empfangseinrichtung gelangende Strahlung mittels wenigstens einer Filtereinrichtung gefiltert.

Hierbei kann es sich beispielsweise um so genannte Bandpassfilter handeln, welche die Strahlung insbesondere hinsichtlich ihrer Wellenlänge filtern. So ist es beispielsweise möglich, dass die besagten Filter lediglich Strahlung in einem engen Wellenlängenbereich passieren lassen beispielweise in einem Wellenlängenbereich, der sich gaussförmig um eine Zentralwellenlänge wie 1560 Nanometer oder 1915 Nanometer herum verteilt.

Bei einem weiteren bevorzugten Verfahren ist es möglich, das Signal der Strahlungseinrichtung bzw. die Strahlung ohne Probe (bzw. ohne Kunststoffvorformling) im Strahlengang zu erfassen, um einen Referenzwert zu erhalten, welcher bei einer Probenmessung verrechnet werden kann.

Bei einer weiteren vorteilhaften Ausführungsform kann eine Verhinderungseinrichtung vorgesehen sein, welche wenigstens zeitweise einen Eintritt von (neuen) Kunststoffvorformlingen in den Strahlengang verhindert und/oder diesen Eintritt blockiert.

So kann beispielsweise eine Hilfsvorrichtung eingesetzt werden welche, wenigstens kurzzeitig, den Eintritt von neuen Preformen in den Strahlengang verhindert und bevorzugt so das dazu notwendige Erfassen der Strahlung ohne Probe (bzw. ohne Kunststoffvorformling) ermöglicht.

Auch wäre es möglich, dass ein Eintritt von neuen Preformen in den Strahlengang durch eine (gezielte) Steuerung der vorhandenen Preformfördereinrichtungen und/oder Preformhandhabungseinrichtungen wenigstens kurzzeitig unterbrochen wird.

Bei einem weiteren bevorzugten Verfahren wird das Signal der Empfangseinrichtung bei abgedecktem Empfänger erfasst oder hinterlegt, insbesondere um es bei der Probenmessung zu verrechnen.

Bei einem weiteren bevorzugten Verfahren werden weitere physikalische Parameter berücksichtigt, wie insbesondere geometrische Daten des Kunststoffvorformlings. Diese Daten können dabei beispielsweise erfasst oder hinterlegt und bevorzugt in Berechnungen einbezogen werden.

Die Signale der Empfangseinrichtung werden bevorzugt auf geeignete Weise mit besonders bevorzugt einstellbarer Verstärkung aufbereitet. Diese aufbereiteten Signale der Empfangseinrichtung werden bevorzugt nach ihrem zeitlichen Verlauf oder zu diskreten Zeitpunkten, etwa mit einem Trigger Signal, zu einem Messwert ausgewertet.

Bevorzugt wird der zeitliche Verlauf des Empfängersignals so analysiert, dass ein lokales Maximum gesucht und/oder als Messwert ausgewertet wird

Die Messwerte der Vorrichtung (d.h. insbesondere die Absorptionswerte und Referenzwerte) werden bevorzugt zu mindestens einem Kennwert der Infrarotabsorption verrechnet. Dies kann bevorzugt ein Kennwert sein, der aus einer Gruppe von Kennwerten ausgewählt ist, welche einen Kennwert für die Erwärmung der Kunststoffvorformlinge, einen Kennwert für die Wasserabsorption, einen quantitativen Wassergehaltsmesswert, und ggf. weitere Kenn- oder Messwerte auf Basis der Messwerte enthält.

Bevorzugt werden diese ermittelten Werte eingesetzt zur - insbesondere kontinuierlichen - Qualitätsüberwachung an bis zu 100% der Kunststoffvorformlinge, insbesondere zum Generieren von Meldungen und/oder Warnungen und auch zum vorsorglichen Abschalten der die Kunststoffvorformlinge herstellenden oder verarbeitenden Anlage (beispielsweise bei Erreichen von einstellbaren Schwellwerten oder einstellbaren relativen Änderungen im zeitlichen Verlauf der ermittelten Werte) Daneben können die ermittelten Werte auch zur Regelung der die Kunststoffvorformlinge herstellenden oder verarbeitenden Anlage oder deren Komponenten verwendet werden.

Bei einer bevorzugten Ausführungsform werden die Kunststoffvorformlinge mittels einer Erwärmungseinrichtung zum Erwärmen von Kunststoffvorformlingen erwärmt und anschließend von einer Umformungseinrichtung zum Umformen von Kunststoffvorformlingen zu Kunststoffbehältnissen umgeformt, wobei bevorzugt eine Steuerung der Erwärmungseinrichtung und/oder eine Steuerung der Umformungseinrichtung unter Berücksichtigung der Auswertung der (von der Strahlungseinrichtung durch die Kunststoffvorformlinge hindurchtretenden und auf die Empfangseinrichtung gelangenden) Strahlung erfolgt das heißt insbesondere unter Berücksichtigung der von den Empfangseinrichtungen ausgewerteten Ergebnissen.

Bevorzugt handelt es sich bei der Erwärmungseinrichtung um eine Infrarot-Erwärmungseinrichtung. Diese kann dabei eine Transporteinrichtung aufweisen, welche die Kunststoffvorformlinge an Heizeinrichtungen vorbeitransportiert, wobei bevorzugt diese Heizeinrichtungen stationär angeordnet sind. Weiterhin können die Kunststoffvorformlinge wehrend des Transports bezüglich Ihrer Längsachse gedreht werden. Es wäre jedoch auch denkbar, dass die Infrarot - Erwärmungseinrichtung eine Vielzahl von bewegbaren Kavitäten aufweist, innerhalb derer die Kunststoffvorformlinge transportiert und erwärmt werden.

Bei der Umformungseinrichtung kann es sich bevorzugt um eine Blasformmaschine und insbesondere eine Streckblasmaschine handeln, welche die Kunststoffvorformlinge durch Beaufschlagung mit einem fließfähigen Medium innerhalb einzelner Kavitäten expandiert. Bei diesem fließfähigen Medium kann es sich insbesondere um Blasluft handeln, es wäre jedoch auch denkbar, dass die Kunststoffvorformlinge durch Beaufschlagung mit einer Flüssigkeit, insbesondere einem abzufüllenden Getränk expandiert werden.

Bevorzugt werden unter Berücksichtigung des Absorptionsverhaltens der Kunststoffvorformlinge Parameter der Erwärmungseinrichtung und/oder Parameter der Umformungseinrichtung angepasst. Bei der Erwärmungseinrichtung kann beispielsweise eine Erwärmungstemperatur angepasst werden, eine Drehgeschwindigkeit der Drehbewegung der Kunststoffvorformlinge bezüglich Ihrer Längsachse, oder insbesondere auch eine Erwärmungsleistung der einzelnen Heizeinrichtungen, was insbesondere auch in Abhängigkeit von unterschiedlichen Bereichen der Kunststoffvorformlinge in der Längsrichtung erfolgen kann. So wäre es beispielsweise möglich, dass in Reaktion auf ein bestimmtes Absorptionsverhalten der Kunststoffvorformlinge die unteren Bereiche der Grundkörper stärker erwärmt werden als (bezogen auf die Längsrichtung) höher liegende Bereiche.

Auch Parameter der Umformungsvorgänge mittels der Umformungsvorrichtung können angepasst werden. Dabei können alle Kavitäten der Umformungsvorrichtung gemeinsam oder beliebige individuelle Kavitäten der Umformungsvorrichtung mit voneinander abweichenden Parametern beeinflusst werden. So kann beispielsweise in Reaktion und/oder unter Berücksichtigung des Absorptionsverhaltens der Kunststoffvorformlinge ein Blasdruck modifiziert werden, die Bewegung einer Reckstange, welche die Kunststoffvorformlinge in ihrer Längsrichtung dehnt oder auch die zeitliche Abfolge unterschiedlicher Druckstufen, mit denen die Kunststoffvorformlinge beaufschlagt werden.

Besonders bevorzugt wird die Absorption der Kunststoffvorformlinge vor deren Erwärmung gemessen, das heißt insbesondere bevor die Kunststoffvorformlinge in eine Erwärmungseinrichtung zum Erwärmen der Kunststoffvorformlinge gelangen bzw. in diese einlaufen.

Es wäre jedoch auch denkbar, dass es sich bei der Erwärmungseinrichtung um eine Mikrowellenerwärmungseinrichtung handelt, wobei die Kunststoffvorformlinge in Kavitäten transportiert und dort mit Mikrowellenstrahlung erwärmt werden. Auch die Erwärmung dieser Mikrowellenerwärmungseinrichtung kann unter Berücksichtigung des Absorptionsverhaltens der Kunststoffvorformlinge angepasst und/oder gesteuert werden.

Die vorliegende Erfindung ist weiterhin auf eine Vorrichtung zum Analysieren von Kunststoffvorformlingen gerichtet, welche eine Transporteirichtung aufweist, welche die Kunststoffvorformlinge entlang eines vorgegebenen Transportpfads transportiert und eine Absorptionsgrads-Ermittlungseinrichtung, welche in wenigstens einem Bereich des Kunststoffvorformlings einen Infrarot-Absorptionsgrad ermittelt, wobei die Absorptionsgrad-Ermittlungseinrichtung eine Strahlungseinrichtung aufweist, welche zur Ermittlung des Infrarotabsorptionsgrades die Kunststoffvorformlinge mit Infrarotstrahlung beaufschlagt und eine Empfangseinrichtung vorgesehen ist, welche durch die Kunststoffvorformlinge hindurchtretende Strahlung aufnimmt und wobei aus dieser aufgenommenen Strahlung ein Infrarot Absorptionsverhalten des Kunststoffvorformlings ermittelbar ist.

Erfindungsgemäß beaufschlagt die Strahlungseinrichtung die Kunststoffvorformlinge mit infraroter Strahlung in einem vorgegebenen Wellenbereich und eine Auswerteeinrichtung ist vorgesehen, welche die Strahlung in Abhängigkeit von ihrer Wellenlänge in einem Wellenlängenbereich von 1500 nm bis 2000 nm auswertet.

Es wird daher auch vorrichtungsseitig vorgeschlagen, dass die Vorrichtung so eingerichtet ist, dass insbesondere Strahlung und/oder das Absorptionsverhalten in einem Wellenlängenbereich von 1500 nm bis 2000 nm ausgewertet wird. Bevorzugt wird innerhalb dieses Wellenlängenbereichs wenigstens ein Unterbereich und bevorzugt wenigstens zwei Unterbereiche ausgewertet, wie insbesondere ein Wellenlängenbereich um eine Wellenlänge von 1550 nm und um eine Wellenlänge von 1915 nm.

Bei einer bevorzugten Ausführungsform weist die Vorrichtung eine zweite Empfangseinrichtung auf und bevorzugt sind die zwei Empfangseinrichtungen zur Aufnahme und/oder Auswertung von Strahlung in unterschiedlichen Wellenlängenbereichen geeignet und bestimmt. Bei einer bevorzugten Ausführungsform weist die Vorrichtung eine optische Filtereinrichtung auf, welche dazu geeignet und bestimmt ist, lediglich Strahlung in einem vorgegebenen Wellenlängenbereich passieren zu lassen. Bevorzugt handelt es sich hierbei um so genannte Bandpassfilter, wie oben erwähnt.

Bevorzugt ist dabei diese Filtereinrichtung in einem Strahlengang zwischen der Strahlungseinrichtung und der Empfangseinrichtung angeordnet. Dabei kann die Filtereinrichtung sowohl vor als auch nach den Kunststoffvorformlingen angeordnet sein.

Bei einer weiteren bevorzugten Ausführungsform ist die Empfangseinrichtung abdeckbar. Auf diese Weise kann ein "Grundrauschen" der Empfangseinrichtung bestimmt werden und bei der Bewertung der Transmissionsgrade berücksichtigt werden.

Bei einer bevorzugten Ausführungsform weist die Vorrichtung eine Erwärmungseinrichtung und/oder ein Umformungseinrichtung auf. Dabei ist es möglich, dass diese Erwärmungseinrichtung und/oder die Umformungseinrichtung Steuerungseinrichtungen aufweisen, welche die Erwärmungseinrichtung und/oder die Umformungseirichtung auch auf Basis des Absorptionsverhaltens des Kunststoffvorformlings steuern.

Weiterhin ist es möglich, dass für jeden Kunststoffvorformling das Absorptionsverhalten über einen vorgegebenen Zeitraum bestimmt wird. Auf diese Weise kann auch ein Absorptionsverhalten des Kunststoffvorformlings über dessen Umfangsrichtung ermittelt werden.

Weiterhin findet bevorzugt eine Auswertung des Absorptionsverhaltens erst statt, wenn ein Kunststoffvorformling den Strahlengang vollständig durchlaufen hat. Bei einem bevorzugten Verfahren wäre es auch denkbar, dass an mehreren Stellen des Transportpfads der Kunststoffvorformlinge Messungen durchgeführt werden, wobei die Kunststoffvorformling bei den unterschiedlichen Messungen auch unterschiedliche Orientierungen aufweisen können.

So wäre es denkbar, dass der Kunststoffvorformling so schnell (insbesondere bezüglich seiner Längsachse) rotiert, dass in einem zeitlich engen Fenster etwa 180° des Umfangs der Kunststoffvorformling im Strahlengang abgebildet werden kann. In diesem Fall würde die Sensorik und Signalverarbeitung eventuelle Unterschiede in Zeiträumen von weniger als 20ms, bevorzugt weniger als 10ms auflösen.

So ist es möglich, dass sich der Kunststoffvorformling während der Erfassung des Absorptionsverhaltens bezüglich seiner Längsrichtung dreht. Es wäre jedoch auch möglich, dass die Kunststoffvorformlinge während der Messung des Absorptionsverhaltens nicht gedreht werden.

Vorzugsweise soll die Erfindung Anwendung finden bei der Verarbeitung und Herstellung von Kunststoffvorformlingen, bei denen die vorzugsweise erfassten Kennwerte für die Erwärmung mittels Infrarotstrahlung (oder auch Mikrowellenstrahlung) sowie für die Wasserabsorption eine besondere Rolle spielen. Bei der Verarbeitung von Kunststoffvorformlingen mit einem Anteil an recyceltem Material, das aus aufbereiteten Flaschen, Kunststoffvorformlingen oder anderen Erzeugnissen gewonnen wird, kann sich insbesondere beim Wechsel von Produktionsschargen die Absorptionscharakteristik der Infrarotstrahlung ändern.

Dies bedingt Änderungen im Temperaturprofil der Kunststoffvorformlinge beim Erwärmen mittels Infrarotstrahlung (oder mittels Mikrowellen). Die Folge können Verschiebungen in der Materialverteilung der hergestellten Behälter beinhalten. Um die Produktion von Ausschussware zu vermeiden soll dies durch Messung des Kennwerts für die Erwärmung mittels Infrarotstrahlung erkannt werden.

Bevorzugt kann, insbesondere bei Auftreten von Fehlern oder Abweichungen (von einem Sollzustand) die Produktion angehalten werden. Zusätzlich oder optional soll durch Regeleingriffe an der Erwärmungseinrichtung der Kunststoffvorformlinge in geeigneter Weise den Veränderungen entgegengewirkt werden.

Bei der Verarbeitung von Kunststoffvorformlingen zu Behältern mit karbonisiertem Füllgut ist die Stabilität des Behälters gegenüber dem vorhandenen Innendruck wichtig. Entscheidend dafür ist die Materialverteilung im Behälter, da diese die lokale Stabilität des Behälters bestimmt. Weiterhin kann ein erhöhter Feuchtigkeitsgehalt in dem Kunststoffvorformling die erreichte Orientierung in der Behälterwand reduzieren und die Stabilität beeinflussen. In Folge kann eine unerwünschte, übermäßige Deformation des Behälters Probleme auftreten.

Um die Produktion von Ausschussware zu vermeiden, soll dies durch Messung der Kennwerte für die Erwärmung mittels Infrarotstrahlung sowie Wasserabsorption erkannt und gegebenenfalls die Produktion angehalten werden. Optional soll durch Regeleingriffe an der Aufheizvorrichtung der Kunststoffvorformlinge in geeigneter Weise den Veränderungen entgegengewirkt werden.

Bei der Umformung von Kunststoffvorformlingen zu Behältern für die Heißbefüllung ist die Formstabilität des Behälters bei Kontakt mit dem heißen Füllgut wichtig. Entscheidend dafür sind insbesondere geringe verbleibende Spannungen in der Flaschenwand, welche unter anderem durch hohe Preformtemperaturen erzielt werden, sowie der Glasübergangspunkt des Materials, welcher durch die Prozessführung gezielt erhöht werden soll (Heatset-Prozess mit temperierter Formwand).

Ein erhöhter Feuchtigkeitsgehalt in dem Kunststoffvorformling kann die Kristallisationsgeschwindigkeit des PET beschleunigen und kann den Kunststoffvorformling bei den notwendigen, hohen Preformtemperaturen noch vor dem Umformen zum Behälter kristallisieren lassen.

Weiterhin verringert sich mit steigendem Wassergehalt in dem Kunststoffvorformling die Glasübergangstemperatur des Materials und die Flasche verliert Stabilität bei dem Kontakt mit dem heißen Füllgut. Um die Produktion von Ausschussware und Probleme bei der Herstellung und Abfüllung der Flaschen zu vermeiden soll dies durch Messung der Kennwerte für die Erwärmung mittels Infrarotstrahlung und Wasserabsorption erkannt und gegebenenfalls die Produktion angehalten werden. Optional oder alternativ kann auch hier durch Regeleingriffe an der Aufheizvorrichtung der Kunststoffvorformlinge in geeigneter Weise den Veränderungen entgegengewirkt werden.

Bei der Herstellung von besonders leichtgewichtigen Behältern ist die Materialverteilung von besonderer Bedeutung. Weisen die Kunststoffvorformlinge eine wechselnde Absorptionscharakteristik der Infrarotstrahlung auf, bedingt dies Änderungen im Temperaturprofil der Kunststoffvorformling beim Erwärmen mittels Infrarotstrahlung. Die Folge können Verschiebungen in der Materialverteilung der hergestellten Behälter beinhalten und deren Funktion beeinträchtigen oder zu anderen Mängeln führen, z. B. lokale zu starke Verstreckung des Materials die als so genannter Weißbruch sichtbar wird.

Weiterhin ist für besonders leichtgewichtige Behälter auf Grund der notwendigerweise höheren Verstreckung des Materials eine höhere Preformtemperatur notwendig. Ein erhöhter Wassergehalt kann die Kristallisationsgeschwindigkeit des Materials in der Preform erhöhen so dass diese noch vor dem Umformen zur Flasche kristallisieren könnte. Weiterhin ist die erreichte Festigkeit der reduzierten Materialmenge von Bedeutung. Durch erhöhten Wassergehalt kann sich die erreichte Orientierung des Materials und damit die Stabilität der Flasche verringern.

Um die Produktion von Ausschussware zu vermeiden soll dies durch Messung der Kennwerte für die Erwärmung mittels Infrarotstrahlung und Wasserabsorption erkannt und gegebenenfalls die Produktion angehalten werden. Optional oder alternativ soll durch Regeleingriffe an der Aufheizvorrichtung der Kunststoffvorformling in geeigneter Weise den Veränderungen entgegengewirkt werden.

Bei der Herstellung von Behältern, bei denen der Kunststoffvorformling vor dem Umformen zum Behälter einer Sterilisation, beispielsweise mit Wasserstoffperoxid oder Elektronenstrahlung, unterzogen wird, ist es notwendig die Kunststoffvorformlinge nach dem Aufheizen bis zur Umformung zum Behälter längere Zeit in aufgeheiztem Zustand zu transportieren.

Dabei kann es zu vorzeitiger Kristallisation des Kunststoffvorformlings kommen, was die Umformung zum Behälter stört oder Qualitätsmängel verursacht. Der Wassergehalt des Kunststoffvorformlings erhöht die Kristallisationsgeschwindigkeit des Preformmaterials.

Um die Produktion von Ausschussware zu vermeiden soll dies durch Messung der Kennwerte für die Erwärmung mittels Infrarotstrahlung und Wasserabsorption erkannt und gegebenenfalls die Produktion angehalten werden. Optional oder alternativ soll durch Regeleingriffe an der Erwärmungseinrichtung der Kunststoffvorformlinge in geeigneter Weise den Veränderungen entgegengewirkt werden.

Weitere Vorteile und Ausführungsformen ergeben sich aus den beigefügten Zeichnungen: Darin zeigen:
- Fig. 1: eine schematische Darstellung einer erfindungsgemäßen Vorrichtung zum Herstellen von Behältnissen;
- Fig. 2: eine Darstellung eines Kunststoffvorformlings;
- Fig. 3: eine Darstellung eines Transmissions- bzw. Absorptionsspektrums;
- Fig. 4: eine Darstellung zur Veranschaulichung der Erfindung in einer ersten Ausführungsform;
- Fig. 5: eine Darstellung der Erfindung in einer zweiten Ausführungsform;
- Fig. 6: eine weitere Darstellung der erfindungsgemäßen Vorrichtung;
- Fig. 7: eine Darstellung einer normierten Transmission;
- Fig. 8: eine Darstellung eines zeitlichen Transmissionsverlaufs.

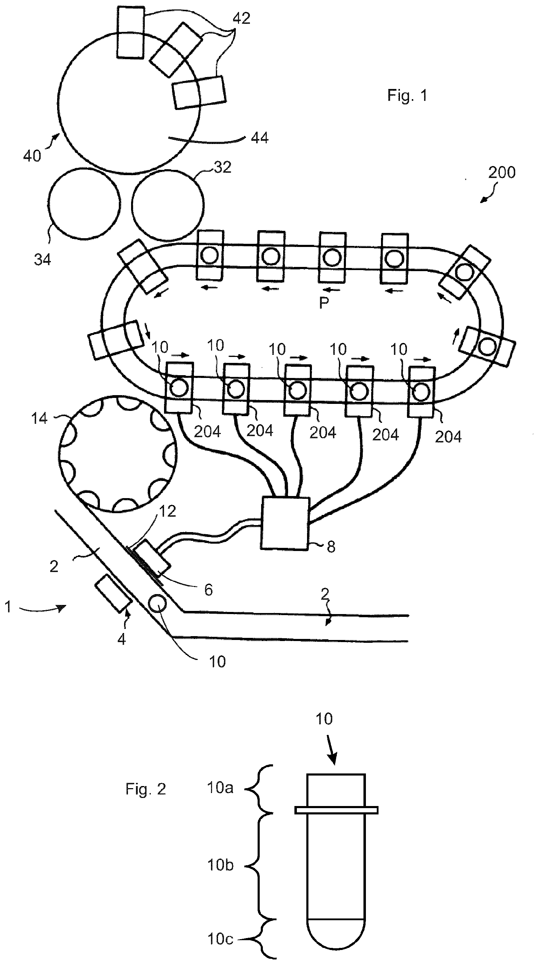

Figur 1 zeigt eine schematische Darstellung einer erfindungsgemäßen Vorrichtung 1 zum Behandeln von Behältnissen. Dabei ist eine Zuführeinrichtung wie eine Zuführschiene 2 vorgesehen, welche Kunststoffvorformlinge 10 in Richtung eines Eintaktsterns 14 transportiert. Diese Zuführeinrichtung ist damit bei der in Fig. 1 gezeigten Ausführungsform die Transporteinrichtung, welche die Kunststoffvorformlinge transportiert.

Im Bereich dieser Zuführeinrichtung ist, die in ihrer Gesamtheit mit 1 bezeichnete Vorrichtung zum Überprüfen der Absorption vorgesehen. Diese weist wenigstens eine Strahlungseinrichtung 4 und eine Empfangseinrichtung 6 auf. Die Strahlungseinrichtung 4 durchleuchtet die Kunststoffvorformlinge 10 und die transmittierte Strahlung wird von der Empfangseinrichtung 6 aufgenommen. Das Bezugszeichen 12 bezieht sich auf eine optional vorhandene Filtereinrichtung, welche in dem Strahlengang zwischen der Strahlungseinrichtung 4 und der Empfangseinrichtung 6 angeordnet ist. Hier kann es sich, wie oben erwähnt um einen Bandpassfilter handeln.

Das Bezugszeichen 8 kennzeichnet eine Auswerteeinrichtung, welche die empfangene Strahlung unter Bezugnahme auf den Absorptionsgrad auswertet. Die Ergebnisse diese Auswerteeinrichtung werden wie in Figur 1 gezeigt an die einzelnen Erwärmungseinrichtungen bzw. Heizeinrichtungen 204 einer Erwärmungseinrichtung 200 übermittelt. Bevorzugt kann dabei ein Wert ermittelt, übergeben und/oder berücksichtigt werden, der für einen Wassergehalt der Kunststoffvorformlinge charakteristisch ist.

Diese Erwärmungseinrichtung 200 weist eine Transporteinrichtung 202 auf, welche die Behältnisse bzw. Kunststoffvorformlinge während des Erwärmungsvorgangs mit den besagten Heizeinrichtungen 204 transportiert. Diese Heizeinrichtungen sind in Figur 1 als bewegliche Heizeinrichtungen dargestellt. Dabei kann es sich bei diesen Heizeinrichtungen 204 beispielsweise um Mikrowellenheizeinrichtungen handeln, welche individuell die einzelnen Kunststoffvorformlinge erwärmen.

Anstelle dessen können bevorzugt die Heizeinrichtungen 204 jedoch auch stationär angeordnet sein und insbesondere in Form von Infrarot Heizeinrichtungen, an welchen die Kunststoffvorformlinge vorbeigeführt werden.

Die erwärmten Kunststoffvorformlinge werden über einen Transferstern 32 an eine Umformungseinrichtung 40 übergeben. Diese Umformungseinrichtung 40 weist hier ebenfalls einen drehbaren Träger 44 auf, an dem eine Vielzahl von Umformungsstationen 42 angeordnet ist. Dabei werden auch bevorzugt die Umformungsstationen 42 unter Zuhilfenahme von Daten der Auswerteeinrichtung 8 gesteuert. Ein weiterer Transferstern 34 fördert die umgeformten Behältnisse wieder aus der Anlage ab.

Bei einer bevorzugten Ausführungsform weist die Vorrichtung eine Zuordnungseinrichtung auf, welche einem bestimmten von der Vorrichtung 1 analysierten Kunststoffvorformling eine Umformungsstation 42, welche diesen später umformen wird, zuordnet.

Figur 2 zeigt eine Darstellung eines Kunststoffvorformlings 10. Dieser weist einen Mündungsbereich 10a auf, einen Grundkörper 10b sowie auch einen Bodenkuppenbereich 10c mit der Kuppe des Kunststoffvorformlings. Wie oben erwähnt, wird insbesondere der Grundkörper 10b mit der Infrarotstrahlung von der Strahlungseinrichtung 4 beaufschlagt.

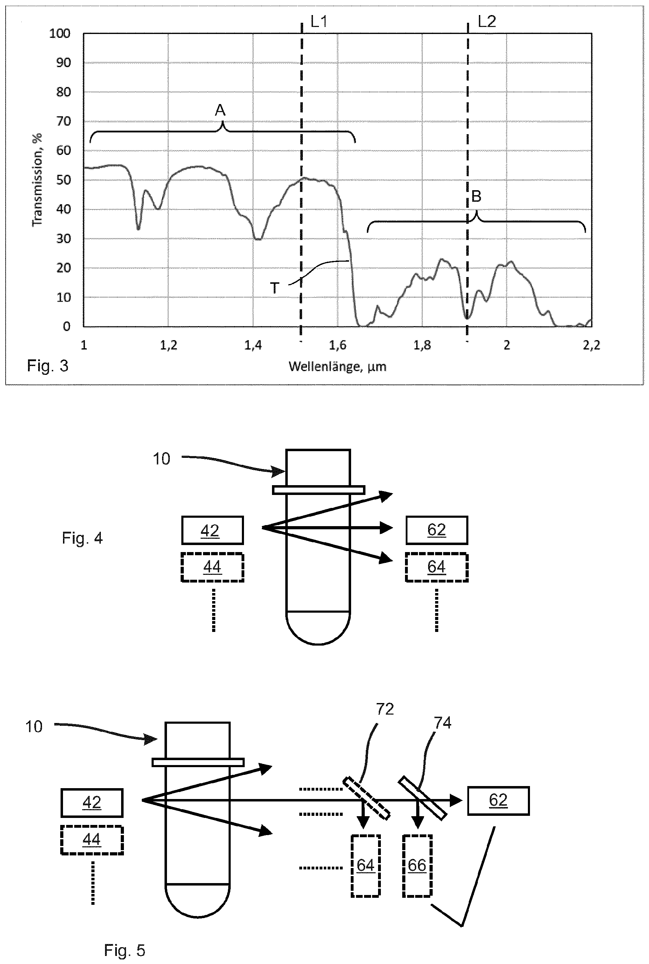

Figur 3 zeigt eine Darstellung des Transmissionsspektrums der Kunststoffvorformlinge. Man erkennt hier einen Bereich A sowie einen Bereich B. In dem Bereich A liegt eine vergleichsweise hohe Transmission vor und damit umgekehrt eine vergleichsweise niedrige Absorption. In dem Wellenlängenbereich B liegt eine niedrige Transmission vor und damit entsprechend eine hohe Absorption des Kunststoffvorformlings. Die beiden vertikalen Linien L1 und L2 kennzeichnen die oben genannten Wellenlängen von 1550 nm und 1915 nm

Wie oben erwähnt, ist von besonderer Bedeutung, der Wellenlängenbereich von ca. 1550 nm, da in diesem Bereich die Absorption relativ gering ist. Ein weiterer interessanter Bereich ist der Bereich zwischen 1,8 und 2 µm, da hier auch starke Änderungen der Absorption vorliegen.

Figur 4 zeigt eine schematische Darstellung zur Veranschaulichung der Bestrahlung der Kunststoffvorformlinge. Man erkennt, dass der Kunststoffvorformling hier von mehreren Strahlungseinrichtungen 42, 44 ... bestrahlt wird und empfängerseitig wenigstens eine und bevorzugt mehrere Empfängereinrichtungen 62, 64 angeordnet sind. Diese können dabei nebeneinander oder untereinander angeordnet sein. Bei der in Fig. 4 gezeigten Darstellung können sowohl die Strahlungseinrichtungen als auch die Empfängereinrichtungen in der Längsrichtung des Kunststoffvorformlings übereinander angeordnet sein.

Wie oben erwähnt, soll jede Empfangseinrichtung eine der Zielwellenlängen erfassen können. Wie erwähnt, erfolgt dies vorzugsweise durch den Einsatz von optischen Bandpassfiltern und in diesem Fall in technisch sinnvoller Weise in einem Wellenlängenbereich von vorzugsweise bis zu 100 nm gegebenenfalls bis zu 200 nm zentriert auf die Zielwellenlänge und bevorzugt bezogen auf ein Transmissionsniveau von 50 % der maximalen Transmission eines Passbandfilters.

Figur 5 zeigt eine Darstellung, bei der hier bloß eine Strahlrichtung hier senkrecht zu einer Längsrichtung de Kunststoffvorformlings erfasst wird. Bei dieser Ausgestaltung sind auch mehrere Empfangseinrichtungen 62, 64, 66 vorgesehen, wobei hier Spiegel 72, 74 vorgesehen sind, die bestimmte Strahlungsanteile auf die unterschiedlichen Empfangseinrichtungen umlenken. Dabei kann es sich hier um Spiegel 72, 74 handeln, die bestimmte Wellenlängen reflektieren und andere Wellenlängen passieren lassen. Auch auf diese Weise kann eine wellenlängenspezifizierte Aufnahme bzw. Erfassung der Strahlung erfolgen.

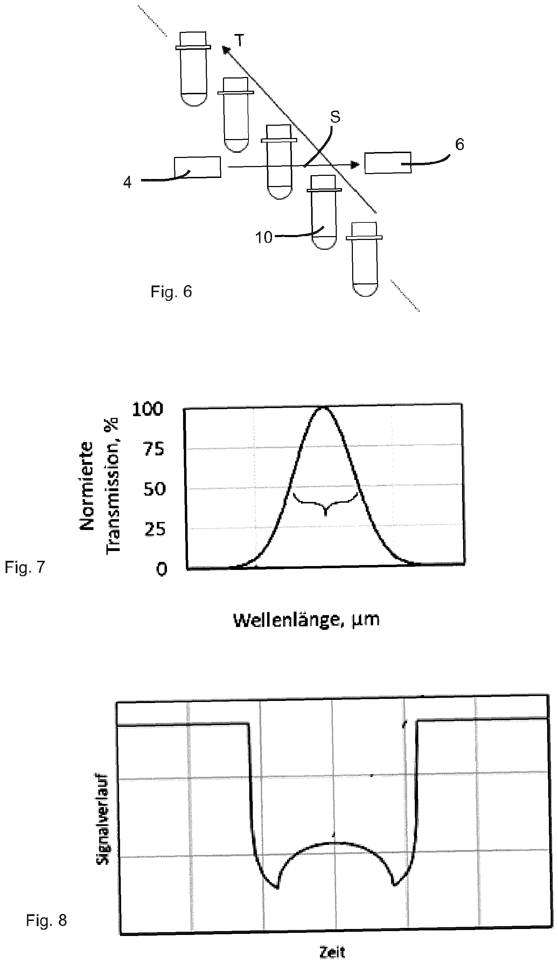

Figur 6 zeigt eine weitere schematische Darstellung zur Veranschaulichung der Erfindung. Man erkennt, dass hier die Kunststoffvorformlinge 10 entlang des Transportpfades T transportiert werden und während des Transports von der Strahlungseinrichtung 4 (Strahlengang S) durchleuchtet werden. Diese Vorrichtung ist hier bevorzugt derart angeordnet, dass die Kunststoffvorformlinge den Strahlengang S senkrecht dazu und bevorzugt stets mit dem gleichen Abschnitt des Preformkörpers durchlaufen.

Figur 7 zeigt eine Darstellung zur Aufnahme eines Profils in einem vorbestimmten Bereich. Dabei kennzeichnet das Maximum der Kurve die Ziel-Wellenlänge die anschließend hier z. B. gaußförmig oder lorentzförmig abnimmt, wobei Transmission in einem entsprechenden Bereich um diese Ziel-Wellenlänge berücksichtigt wird. Die Zielwellenlänge kann dabei das Maximum des spektralen Verlaufs sein.

Figur 8 zeigt einen zeitlichen Verlauf eines Signals, welches auch aus der Bewegung bzw. dem Transport der Kunststoffvorformlinge hervorgeht.

Die Anmelderin behält sich, vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Analysieren von Kunststoffvorformlingen, wobei Kunststoffvorformlinge (10) mittels einer Transporteinrichtung (2) entlang eines vorgegebenen Transportpfads transportiert werden und in wenigstens einem Bereich wenigstens eines Kunststoffvorformlings ein Infrarot-Absorptionsgrad ermittelt wird, wobei zur Ermittlung des Infrarot-Absorptionsgrades der Kunststoffvorformling mittels einer ersten Strahlungseinrichtung (4) mit Infrarotstrahlung beaufschlagt wird und durch den Kunststoffvorformling hindurch tretende Strahlung mittels wenigstens einer Empfangseinrichtung (62) aufgenommen wird und aus dieser aufgenommenen Strahlung ein Infrarot-Absorptionsverhalten des Kunststoffvorformlings ermittelt wird,
**dadurch gekennzeichnet, dass**
die Strahlungseinrichtung (4) den Kunststoffvorformling mit infraroter Strahlung in einem vorgegebenen Wellenlängenbereich beaufschlagt und eine Auswerteeinrichtung (8) die Strahlung in Abhängigkeit von ihrer Wellenlänge in einem Wellenlängenbereich von 1500 nm bis 2000 nm auswertet.

2. Verfahren nach Anspruch 1,
**dadurch gekennzeichnet, dass**
die Kunststoffvorformlinge einen Mündungsbereich (10a), einen sich in einer Längsrichtung (L) der Kunststoffvorformlinge (10) an diesen Mündungsbereich (10a) anschließenden Grundkörper (10b) und einen sich in der Längsrichtung an den Grundkörper anschließenden Bodenkuppenbereich (10c) aufweisen und die Kunststoffvorformlinge (10) im Bereich des Grundkörpers (10b) mit der Infrarotstrahlung beaufschlagt werden.

3. Verfahren nach wenigstens einem der vorangegangenen Ansprüche,
**dadurch gekennzeichnet, dass**
wenigstens ein Wert ausgegeben wird, der für einen Wassergehalt der Kunststoffvorformlinge (10) charakteristisch ist.

4. Verfahren nach wenigstens einem der vorangegangenen Ansprüche,
**dadurch gekennzeichnet, dass**
die Absorption in einem ersten Wellenlängenbereich bestimmt wird, wobei dieser erste Wellenlängenbereich zwischen 1500 nm und 1600 nm liegt.

5. Verfahren nach wenigstens einem der vorangegangenen Ansprüche,
**dadurch gekennzeichnet, dass**
die Absorption in einem zweiten Wellenlängenbereich bestimmt wird, wobei dieser erste Wellenlängenbereich zwischen 1850 nm und 1960 nm liegt.

6. Verfahren nach wenigstens einem der vorangegangenen Ansprüche,
**dadurch gekennzeichnet, dass**
die durch die Kunststoffvorformlinge hindurchtretende Strahlung mittels wenigstens zwei Empfangseinrichtungen (62, 64) aufgenommen wird.

7. Verfahren nach dem vorangegangenen Anspruch,
**dadurch gekennzeichnet, dass**
die zwei Empfangseinrichtungen (62, 64) zur Aufnahme und/oder zur Auswertung von Strahlung in unterschiedlichen Wellenlängenbereichen geeignet und bestimmt sind.

8. Verfahren nach dem vorangegangenen Anspruch,
**dadurch gekennzeichnet, dass**
die Strahlung von wenigstens zwei Strahlungseinrichtungen ausgegeben wird.

9. Verfahren nach dem vorangegangenen Anspruch,
**dadurch gekennzeichnet, dass**
die von der Strahlungseinrichtung ausgegebene und auf die Empfangseinrichtung gelangende Strahlung mittels wenigstens einer Filtereinrichtung gefiltert wird.

10. Verfahren nach wenigstens einem der vorangegangenen Ansprüche,
**dadurch gekennzeichnet, dass**
die Kunststoffvorformlinge (10) mittels einer Erwärmungseinrichtung zum Erwärmen von Kunststoffvorformlingen erwärmt werden und anschließend von einer Umformungseinrichtung zum Umformen von Kunststoffvorformlingen zu Kunststoffbehältnissen umgeformt werden, wobei eine Steuerung der Erwärmungseinrichtung und/oder eine Steuerung der Umformungseinrichtung unter Berücksichtigung der Auswertung der Strahlung erfolgt.

11. Vorrichtung (1) zum Analysieren von Kunststoffvorformlingen, mit einer Transporteinrichtung (2), welche die Kunststoffvorformlinge (10) entlang eines vorgegebenen Transportpfads transportiert und mit einer Absorptionsgrad-Ermittlungseinrichtung (4, 62), welche in wenigstens einem Bereich des Kunststoffvorformlings einen Infrarot-Absorptionsgrad ermittelt, wobei die Absorptionsgrad-Ermittlungseinrichtung (4, 62) eine Strahlungseinrichtung (4) aufweist welche zur Ermittlung des Infrarot-Absorptionsgrades die Kunststoffvorformlinge mit Infrarotstrahlung beaufschlagt und eine Empfangseinrichtung (62) vorgesehen ist, welche durch die Kunststoffvorformlinge hindurch tretende Strahlung aufnimmt und aus dieser aufgenommenen Strahlung ein Infrarot-Absorptionsverhalten des Kunststoffvorformlings ermittelbar ist,
**dadurch gekennzeichnet, dass**
die Strahlungseinrichtung (4) die Kunststoffvorformlinge mit infraroter Strahlung in einem vorgegebenen Wellenlängenbereich beaufschlagt und eine Auswerteeinrichtung (8) vorgesehen ist, welche die Strahlung in Abhängigkeit von ihrer Wellenlänge in einem Wellenlängenbereich von 1500 nm bis 2000 nm auswertet.

12. Vorrichtung (1) nach Anspruch 11,
**dadurch gekennzeichnet, dass**
die Vorrichtung (1) eine zweite Empfangseinrichtung aufweist und bevorzugt die zwei Empfangseinrichtungen (62, 64) zur Aufnahme und/oder zur Auswertung von Strahlung in unterschiedlichen Wellenlängenbereichen geeignet und bestimmt sind.

13. Vorrichtung (1) nach wenigstens einem der vorangegangenen Ansprüche 9-12,
**dadurch gekennzeichnet, dass**
die Vorrichtung (1) eine Filtereinrichtung (12) aufweist, welche dazu geeignet und bestimmt ist, lediglich Strahlung in einem vorgegebenen Wellenlängenbereich passieren zu lassen.
